# EUROPÄISCHE PATENTANMELDUNG

(11) **EP 0 545 308 A2**
(43) Veröffentlichungstag der Anmeldung: **09.06.1993**
(21) Anmeldenummer: 92120299.0
(22) Anmeldetag: 27.11.1992
(51) Int. Cl.: C08L 67/00, C08L 77/12, C08L 25/12

(54) **Mischungen aus flüssigkristallinen Copolymeren und Fluorthermoplasten sowie deren Verwendung**

(30) Priorität: 30.11.1991 DE 4139547
(71) Anmelder: HOECHST AKTIENGESELLSCHAFT, D-65926 Frankfurt am Main (DE)
(72) Erfinder: Römer, Michael, Dr., W-6080 Gross-Gerau (DE); Schleicher, Andreas, Dr., W-6141 Einhausen (DE); Stamprech, Peter, W-8269 Burgkirchen (DE)

(57) **Zusammenfassung**

Mischungen aus A) flüssigkristallinen Copolymeren und B) Fluorthermoplasten, mit einem Anteil an A) 45 bis 97 Gew.-% und einem Anteil an B) 3 bis 55 Gew.-% zeichnen sich durch eine erhöhte Kerbschlagzähigkeit aus. Sie eignen sich daher besonders gut zur Herstellung von Formkörpern oder als Matrixmaterial für Verbundwerkstoffe.

## Beschreibung

Die Erfindung betrifft Mischungen aus flüssigkristallinen Copolymeren und Fluorthermoplasten, die eine erhöhte Kerbschlagzähigkeit aufweisen, sowie deren Verwendung zur Herstellung von Formkörpern.

Die Synthese und Eigenschaften flüssigkristalliner Copolyester (LCP) und Copolyesteramide sind Gegenstand einer Vielzahl von Veröffentlichungen. Ein gängiges Verfahren zu ihrer Herstellung ist die Schmelzkondensation der Ausgangverbindungen, wodurch eine hohe Reinheit und ein hohes Molekulargewicht der Polymere gewährleistet wird (US-A-4 161 470; US-A-3 637 595).

In jüngster Zeit hat das Interesse an flüssigkristallinen Polyestern zugenommen, wie das Erscheinen einer Reihe von Publikationen zeigt (EP-A 0 394 813; EP-A 0 390 489). Alle diese Veröffentlichungen weisen auf die außergewöhnlichen mechanischen und rheologischen Eigenschaften der Materialien hin. Hervorzuheben sind dabei insbesondere ihre hohen Elastizitätsmoduln sowie die hervorragenden Fließfähigkeiten bei hohen Scherraten. Weiterhin weisen die Materialien eine hohe Kerbschlagzähigkeit auf. Jedoch ist es in manchen Fällen wünschenswert, daß diese zuletzt genannte Eigenschaft noch höhere Werte ergibt. Es war daher erwünscht, die flüssigkristallinen Polyester in dieser Hinsicht zu verbessern.

Aus der Literatur ist ferner bekannt, daß durch das Mischen von Polymeren die Einstellung wichtiger mechanischer Eigenschaften möglich ist. Man ist bis heute jedoch weit davon entfernt, die Eigenschaften von derartigen Polymerlegierungen gesichert vorherzusagen, so daß das Ergebnis des Mischens verschiedener Polymerer weitgehend empirisch bleibt (Journal of Polymer Science, Polymer Pyhsics Edition, Vol 21, S. 11 (1983)).

Es zeigte sich, daß die genannte Aufgabe durch das Legieren von flüssigkristallinen Copolyestern und/oder Copolyesteramiden mit Fluorthermoplasten gelöst werden konnte.

Die Erfindung bezieht sich auf Mischungen aus A) flüssigkristallinen Copolymeren und B) Fluorthermoplasten, wobei der Anteil an A) 45 bis 97 Gew.-% und der Anteil an B) 3 bis 55 Gew.-% beträgt.

Die in den Mischungen gemäß der Erfindung eingesetzten flüssigkristallinen Polymere A) sind im allgemeinen vollaromatische Polyester, die anisotrope Schmelzen bilden und mittlere Molekulargewichte (Mw=Gewichtsmittel) von 2000 bis 200000, bevorzugt von 3500 bis 50000 und insbesondere von 4000 bis 30000 g/mol aufweisen. Eine für die Mischungen gemäß der Erfindung geeignete Klasse flüssigkristalliner Polymere ist beschrieben in US-A-4 161 470. Es handelt sich dabei um Naphtoyl-Copolyester mit wiederkehrenden Struktureinheiten der Formel I und II 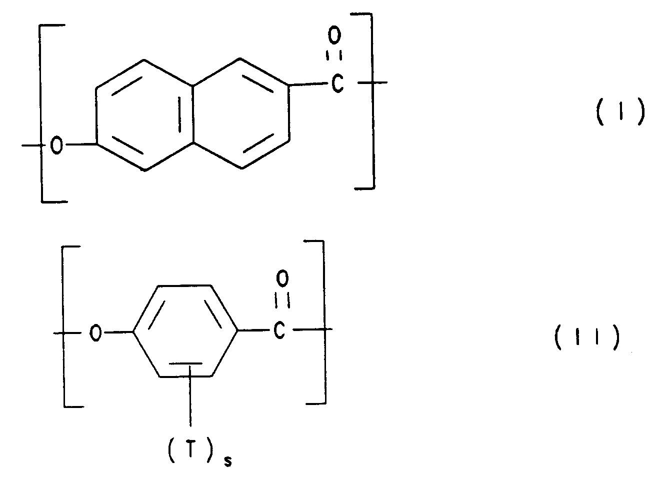
worin T ausgewählt ist aus einem Alkylrest, einem Alkoxyrest, jeweils mit 1 bis 4 Kohlenstoffatomen oder einem Halogen, vorzugsweise Chlor, Brom oder Fluor, s bedeutet Null oder eine ganze Zahl 1, 2, 3 oder 4, wobei im Falle mehrerer Reste T diese unabhängig voneinander gleich oder verschieden sind. Die Naphthoyl-Copolyester enthalten 10 bis 90, vorzugsweise 25 bis 45 Mol-% Struktureinheiten der Formel I und 90 bis 10, vorzugsweise 85 bis 55 Mol-% der Formel II.

Weitere für die Mischungen gemäß der Erfindung eingesetzte flüssigkristalline Polyester sind in EP-A-0 278 066 und US-A-3 637 595 beschrieben. Die dort angeführten Oxybenzoylcopolyester enthalten Struktureinheiten der Formeln III, IV und V, wobei jeweils ein oder mehrere genannte Struktureinheiten vorliegen können. 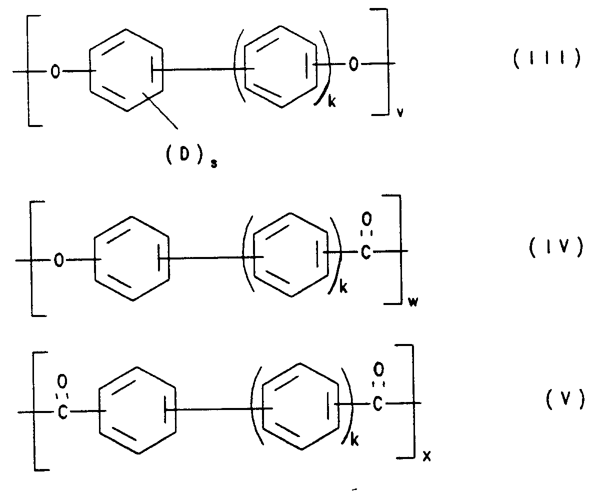
In den Formeln III, IV und V ist k Null oder 1, v, w und x sind ganze Zahlen, die gleich oder größer als 1 sind, D ist ausgewählt aus einem Alkylrest mit 1 bis 4 Kohlenstoffatomen, einem Arylrest, einem Aralkylrest mit jeweils 6 bis 10 Kohlenstoffatomen oder einem Halogen wie Fluor, Chlor oder Brom, s hat die obengenannte Bedeutung, wobei bei mehreren Resten D diese unabhängig voneinander gleich oder verschieden sind. Die Summe der Indexzahlen v, w und x weist Werte von 30 bis 600 auf. Die Oxybenzoylcopolyester enthalten im allgemeinen 0,6 bis 60, vorzugsweise 8 bis 48 Mol-% Struktureinheiten der Formel III, 0,4 bis 98,5, vorzugsweise 5 bis 85 Mol-% Struktureinheiten der Formel IV und 1 bis 60, vorzugsweise 8 bis 48 Mol-% Struktureinheiten der Formel V, wobei sich die Anteile der Struktureinheiten der Formeln III, IV und V auf 100 Mol-% ergänzen.

Für die Mischungen sind ebenfalls Copolyester geeignet, die nur Struktureinheiten der Formeln III und V enthalten. Diese flüssigkristallinen Polymere enthalten im allgemeinen 40 bis 60 Mol-% der Struktureinheiten der Formel III und 60 bis 40 Mol-% Struktureinheiten der Formel V. Bevorzugt ist hierbei ein Molverhältnis von 1 zu 1. Solche Polyester werden zum Beispiel in US-A-4 600 765; US-A-4 614 790 und US-A-4 614 791 beschrieben.

Ebenfalls geeignet sind solche Copolyester, die neben den Struktureinheiten ausgewählt aus den Formeln III bis V, auch solche der Formeln I und/oder II enthalten; z.B. mit einem Anteil an Struktureinheiten der Formel I von 15 bis 1 Mol-%, der Formel II von 50 bis 79 Mol-%, der Formel III von 20 bis 10 Mol-% und der Formel V von 20 bis 10 Mol-%.

Für die Mischungen gemäß der Erfindung sind außerdem Copolyesteramide geeignet, die neben einer oder mehreren Struktureinheiten der Formeln I bis V noch zusätzlich mindestens eine Struktureinheit der Formel VI 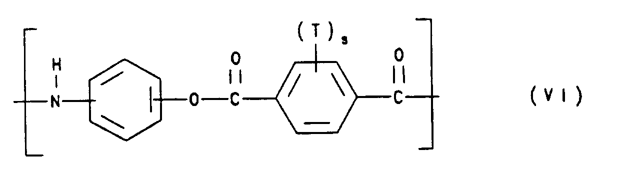
enthalten, worin T und s die bereits beschriebene Bedeutung besitzen.

Die Legierungen gemäß der Erfindung enthalten Fluorthermoplaste mit wiederkehrenden Einheiten der Formel: 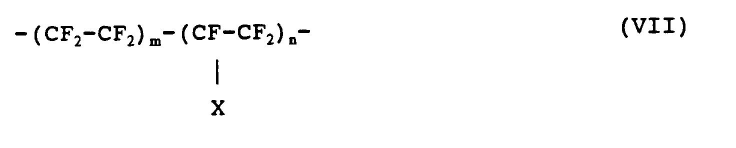
wobei X für O-R steht mit R als perfluoriertem Alkylrest von C₁ bis C₈, m und n stehen jeweils für Zahlen von 0,01 bis 0,99 wobei die Summe von m und n 1 ergeben muß.

Weiterhin können die Legierungen gemäß der Erfindung Fluorthermoplaste mit wiederkehrenden Einheiten der Formel enthalten:

-(CF₂-CF₂)ₘ-(CH₂-CH₂)ₙ- (VIII)

worin m und n die oben genannte Bedeutung besitzen.

Für die Mischungen gemäß der Erfindung sind außerdem Fluorthermoplaste geeignet, die wiederkehrende Struktureinheiten der folgenden Formel aufweisen:

-(CF₂-CH₂)- (IX)

Der Anteil an Fluorthermoplasten in den Mischungen gemäß der Erfindung beträgt im allgemeinen 3 bis 55 Gew.-% und bevorzugt 3 bis 45 Gew.-%; der Anteil an flüssigkristallinen Copolymeren in den erfindungsgemäßen Mischungen liegt bei 97 bis 45 Gew.-% und bevorzugt 97 bis 55 Gew.-%, wobei die Summe der beiden Polymere 100 Gew.-% beträgt. Die Mischungen gemäß der Erfindung können ein oder mehrere Fluorthermoplasten und einen oder mehrere flüssigkristalline Copolymere sowie modifizierte Fluorthermoplasten und modifizierte flüssigkristalline Polyester enthalten. Die Mischungen werden nach bekannten Standardmethoden hergestellt und verarbeitet, wie sie für Thermoplasten üblich sind, z. B. durch Kneten, Extrudieren, Pressen oder Spritzgießen.

Die Mischungen können zusätzlich übliche Additive enthalten, beispielsweise thermische und UV-Stabilisatoren, Antistatika, Flammschutzmittel, Farbstoffe, Pigmente, anorganische und organische Füllstoffe, d. h. insbesondere auch verstärkende Zusätze wie Glas-, Kohle- oder Hochmodulfasern. Die Mischungen eignen sich zur Herstellung von Formkörpern, beispielsweise in Form von Platten, Fasern, Folien, Steckerleisten und Schläuchen, hergestellt nach dem Spritzguß- oder Extrusionsverfahren, insbesondere aber auch als Matrixmaterial für Verbundwerkstoffe.

Folgende Materialien wurden in den Beispielen eingesetzt:
(A1) Flüssigkristalliner Copolyester mit wiederkehrenden Struktureinheiten der Formel 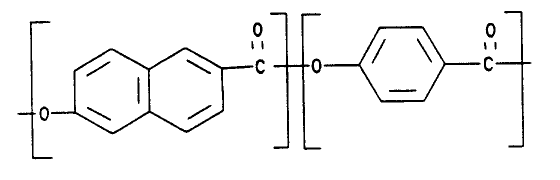 worin der Anteil der Oxynaphtoylstruktureinheiten 20 Mol% und der Anteil der Oxybenzoylstruktureinheiten 80 Mol% beträgt.
(A2) Flüssigkristalliner Copolyester mit Struktureinheiten der Formel 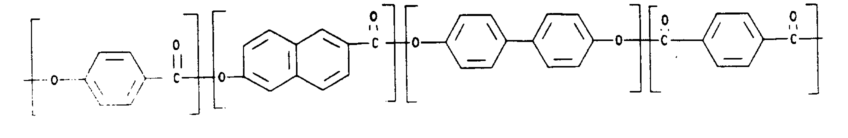 worin der Anteil der Oxynaphtoylstruktureinheiten 4 Mol-%, der Anteil der Oxybenzoylstruktureinheiten 60 Mol-%, der Anteil der Bisoxybisphenylenstruktureinheiten 18 Mol-% und der Anteil der Bisbenzoylstruktureinheiten 18 Mol-% beträgt.
(B1) Fluorthermoplast mit wiederkehrenden Einheiten der Formel 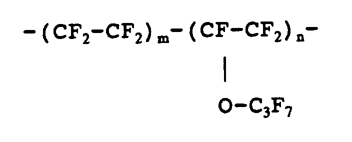 worin m für 0,05 und n für 0,95 steht.
(B2) Fluorthermoplast mit wiederkehrenden Einheiten der Formel

   -(CF₂-CF₂)ₘ-(CH₂-CH₂)ₙ-

   worin m und n jeweils Werte von 0,4 bis 0,6 aufweisen. Je nach Verhältnis von m zu n und in Abhängigkeit vom mittleren Molekulargewicht liegt der Schmelzpunkt der Polymere zwischen 260°C und 290°C.

Der MFI-Wert der eingesetzten Komponente (B1) beträgt 15 g/10 min (375 °C, 5 kg) und der der Komponente (B2) 60 g/10 min (297 °C; 2kg).

Die Materialien wurden zunächst getrocknet (140°C, 24h) und anschließend in verschiedenen Gewichtsverhältnissen in einem Extruder LSM 30.34 GL der Fa. Leistritz (Nürnberg, Bundesrepublik Deutschland) unter Schutzgas (Stickstoff) bei Temperaturen von 310°C bis 340°C extrudiert und ganuliert. Die erhaltenen Granulate wurden getrocknet (140°C, 24h) und zu Formteilen wie Schulterstäben und Platten spritzgegossen und auf ihre physikalischen und thermischen Eigenschaften hin untersucht. Dazu wurden folgende Geräte verwendet:
Eine Zug-Dehnungsmaschine Typ 1455 der Fa. Zwick (Ulm, Bundesrepublik Deutschland) zur Bestimmung der Reißfestigkeit, Reißdehnung und des Zug-E-Moduls.

Eine Biege-Dehnungsmaschine Typ. 1454 der Fa. Zwick (Ulm, Bundesrepublik Deutschland) zur Bestimmung der Biegespannungen, der Randfaserdehnung und des Biege-E-Moduls.

Die Wärmeformbeständigkeit wurde nach DIN 53461 Methode A bestimmt.

Die Ermittlung der Kerbschlagzähigkeit erfolgte nach IZOD (ASTM D256-73).

### Beispiele:

1) Mittels des Zweischneckenextruders LSM 30.34 GL wurden 80 Gew.-% des flüssigkristallinen Copolyesters (A1) und 20 Gew.-% des Fluorthermoplasten (B1) nach intensiver Trocknung gemeinsam unter Stickstoff extrudiert, granuliert und zu Schulter- und Schlagstäben spritzgegossen. Die Tabelle 1 zeigt die ermittelten mechanischen Eigenschaften der Mischung.

**Tabelle 1**

| | | |
|---|---|---|
| A1 : B1 | 100 : 0 | 80 : 20 |
| Reißfestigkeit (MPa) | 155 | 154 |
| Reißdehung (%) | 3,3 | 3,6 |
| Zug-E-Modul (MPa) | 8530 | 8400 |
| Biegespannung bei 3,5 % (MPa) | 135 | 146 |
| Biegefestigkeit (MPa) | 149 | 156 |
| Randfaserdehung bei Höchstkraft | 7 | 5,1 |
| Biege-E-Modul (MPa) | 6920 | 7560 |
| Kerbschlagzähigkeit (J/m) | 474 | 744 |
| HDT/A (°C) | 175 | 179 |

2) Mittels des genannten Zweischneckenextruders wurden 95 bzw. 90 Gew.-% des flüssigkristallinen Copolyesters (A2) und 5 bzw. 10 Gew.-% des Fluorthermoplasten (B2) nach intensiver Trocknung gemeinsam unter Stickstoff extrudiert, granuliert und wie vorstehend zu Schulter- und Schlagstäben spritzgegossen. Die Tabelle 2 zeigt die ermittelten mechanischen Eigenschaften der Mischungen.

**Tabelle 2**

| | | | |
|---|---|---|---|
| A2 : B2 | 100 : 0 | 95 : 5 | 90 : 10 |
| Reißfestigkeit (MPa) | 108 | 106 | 105 |
| Reißdehung (%) | 2,7 | 2,6 | 2,4 |
| Zug-E-Modul (MPa) | 7740 | 7280 | 7360 |
| Biegespannung bei 3,5 % (MPa) | 108 | 111 | 113 |
| Biegefestigkeit (MPa) | 116 | 113 | 116 |
| Randfaserdehung bei Höchstkraft | 4,7 | 4,3 | 4,0 |
| Biege-E-Modul (MPa) | 6790 | 7210 | 7280 |
| Kerbschlagzähigkeit (J/m) | 261 | 294 | 312 |
| HDT/A (°C) | 227 | 220 | 227 |

## Patentansprüche

1. Mischung aus A) flüssigkristallinen Copolymeren und B) Fluorthermoplasten, dadurch gekennzeichnet, daß der Anteil an A) 45 bis 97 Gew.-% und der Anteil an B) 3 bis 55 Gew.-% beträgt.

2. Mischung nach Anspruch 1, dadurch gekennzeichnet, daß die Komponente A) ein aromatischer Polyester mit einem mittleren Molekulargericht von 200 bis 200000 oder ein Copolyesteramid ist.

3. Mischungen nach Anspruch 1 oder 2, dadurch gekennzeichnet, daß die Komponente A) wiederkehrende Einheiten der Formel 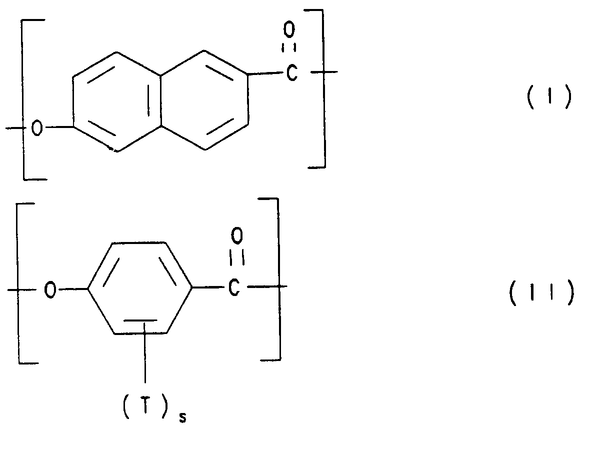 besitzt, worin T gleich oder verschieden und ausgewählt ist aus einem Alkylrest, einem Alkoxyrest, jeweils mit 1 bis 4 C-Atomen oder einem Halogen, s ist Null oder eine ganze Zahl 1, 2, 3 oder 4; das Verhältnis der Einheiten (I) und (II) beträgt 10 bis 90 zu 10 bis 90 Molprozent.

4. Mischung nach Anspruch 1 oder 2, dadurch gekennzeichnet, daß die Komponente A) mindestens zwei wiederkehrende Einheiten der Formeln 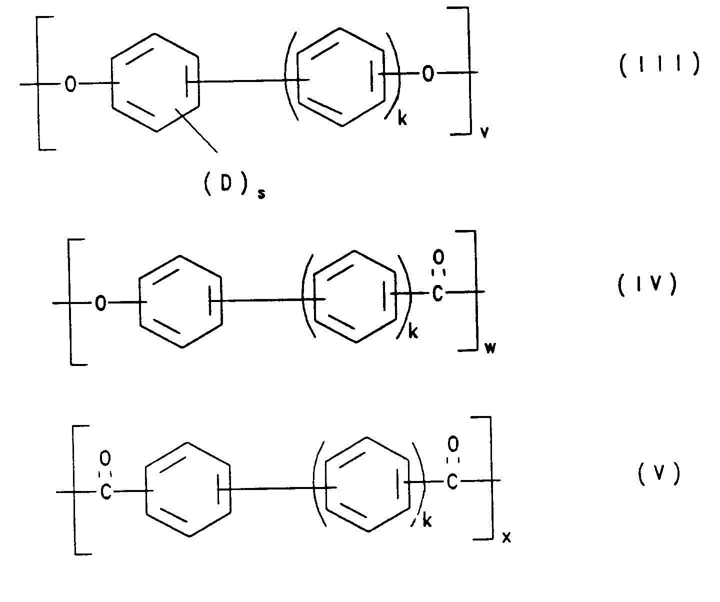 aufweist, in denen k Null oder 1 ist, v, w und x sind ganze Zahlen, die gleich oder größer als 1 sind, D ist gleich oder verschieden und ist ausgewählt aus einem Alkylrest mit 1 bis 4 C-Atomen, einem Arylrest, einem Aralkylrest, jeweils mit 6 bis 10 C-Atomen oder einem Halogen.

5. Mischung nach Anspruch 4, dadurch gekennzeichnet, daß die Summe der Indexzahlen v, w und x 30 bis 600 beträgt und der Anteil der Einheiten 0,6 bis 60 Mol-% (III), 0,4 bis 98,5 Mol-% (IV) und 1 bis 60 Mol-% (V) ist, bezogen auf 100 Mol-%.

6. Mischung nach Anspruch 4 oder Anspruch 5, dadurch gekennzeichnet, daß die Komponente A) aus 40 bis 60 Mol-% der Einheiten (III) und 40 bis 60 Mol-% der Einheiten (V) besteht.

7. Mischung nach einem oder mehreren der Ansprüche 1 bis 6, dadurch gekennzeichnet, daß die Komponente A) neben den ausgewählten Einheiten aus (III) bis (V) auch solche der Einheiten (I) und/oder (II) enthält.

8. Mischung nach einem oder mehreren der Ansprüche 1 bis 7, dadurch gekennzeichnet, daß die Komponente A) neben Einheiten (I) bis (V) zusätzlich mindestens eine Struktureinheit 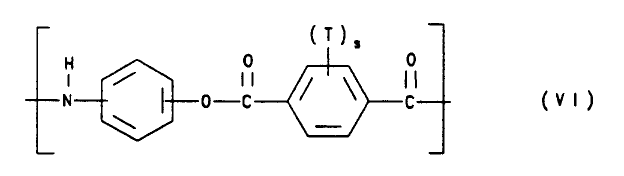 enthält, worin T und s die obengenannte Bedeutung haben.

9. Mischung nach einem oder mehreren der Ansprüche 1 bis 8, dadurch gekennzeichnet, daß die Komponente B) wiederkehrende Einheiten der Formel 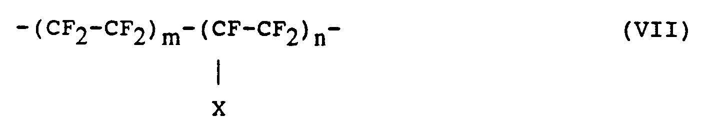 oder
-(CF₂-CF₂)ₘ-(CH₂-CH₂)ₙ- (VIII)
oder
-(CF₂-CH₂)- (IX)
aufweist, in den X für OR steht mit R als perfluorierenden Rest mit 1-8 C-Atomen, m und n stehen jeweils für Zahlen von 0,01 bis 0,99, wobei die Summe aus m und n stets 1 ist.

10. Mischung nach einem oder mehreren der Ansprüche 1 bis 9, dadurch gekennzeichnet, daß die Komponente A) die Struktureinheiten enthält: (I) 1 bis 15 Mol-%, (II) 50 bis 79 Mol-%, (III) 10 bis 20 Mol-% und (V) 10 bis 20 Mol-%, wobei die Summe aller Einheiten stets 100 Mol-% ist.

11. Mischung nach einem oder mehreren der Ansprüche 1 bis 10, dadurch gekennzeichnet, daß sie zusätzlich übliche Additive enthält.

12. Verwendung der Mischung gemäß einem oder mehreren der Ansprüche 1 bis 11 zur Herstellung von Formkörpern oder als Matrixmaterial für Verbundwerkstoffe.
